**Europäisches Patentamt**

**European Patent Office**

**Office européen des brevets**

(19)

(11) Veröffentlichungsnummer: **0 020 353**
**B1**

(12) # EUROPÄISCHE PATENTSCHRIFT

(45) Veröffentlichungstag der Patentschrift: **13.07.83**

(21) Anmeldenummer: **79900868.5**

(22) Anmeldetag: **29.11.79**

(86) Internationale Anmeldenummer:
**PCT/CH79/00152**

(87) Internationale Veröffentlichungsnummer:
**WO 80/01192 12.06.80 Gazette 80/13**

(51) Int. Cl.³: **F 16 B 47/00,**
**A 47 J 45/04, A 47 G 19/10**

(54) **VORRICHTUNG ZUM HALTEN EINES GEGENSTANDES AUF EINER GLATTEN ABSTELLFLÄCHE.**

(30) Priorität: **01.12.78 CH 12302/78**

(43) Veröffentlichungstag der Anmeldung:
**07.01.81 Patentblatt 81/1**

(45) Bekanntmachung des Hinweises auf die Patenterteilung:
**13.07.83 Patentblatt 83/28**

(84) Benannte Vertragsstaaten:
**AT DE FR GB NL SE**

(56) Entgegenhaltungen:
**CH - A - 537 554**
**DE - A - 2 044 859**
**DE - C - 872 105**
**DE - C - 884 232**
**DE - C - 2 211 293**
**GB - A - 1 015 347**

(73) Patentinhaber: **FISHMAN, Avraham**
**Klosbachstrasse 110**
**8032 Zürich (CH)**

(72) Erfinder: **FISHMAN, Avraham**
**Klosbachstrasse 110**
**8032 Zürich (CH)**

(74) Vertreter: **Feldmann, Clarence Paul et al,**
**c/o Patentanwaltsbüro FELDMANN AG Postfach**
**Kanalstrasse 17**
**CH-8152 Glattbrugg (CH)**

Courier Press, Leamington Spa, England.

# Vorrichtung zum Halten eines Gegenstandes auf einer glatten Abstellfläche

Die Erfindung bezieht sich auf eine Vorrichtung zum Halten eines Gegenstandes auf einer glatten Abstellfläche.

In modernen Küchen sind die Abstellflächen von Anrichten und Tischen oft mit Kunststoffplatten mit sehr glatter Oberfläche versehen. Diese sind leicht zu reinigen, beim Anrühren von Teig, beim Quirlen oder Mixen aber unbequem glatt, weil die Schüssel oder der Topf auf der glatten Fläche rutscht. Auch Schüsseln oder Teller rutschen auf solchen glatten Oberflächen leicht.

Aehnliche Probleme stellen sich beim Fixieren von Gegenständen auf Schiffen. Die Schlenker- und Rollbewegungen eines Schiffes erfordern eine zusätzliche Fixierung.

Auch in der Industrie sind Vorrichtungen erwünscht, mit denen Gegenstände beispielsweise auf einer glatten vibrierenden Fläche gegen Verrutschen gesichert werden müssen. Hiert werden oft Vorrichtungen mit magnetischer Haftkraft verwendet.

Stand der Technik

Aus der DE—C—872.105 ist eine Vorrichtung bekannt geworden, die zwei in Abstand von und parallel zueinander verlaufende Wirkflächen hat zwischen denen sich ein am Umfang derselben angeordneter Stützring befindet. Die Wirkflächen sind in ihrem mittleren Teil je mit einem tellerförmigen Element mit verzahntem rand verbunden. Die verzahnten Ränder greifen ineinander, sodass sie sich nicht gegeneinander verdrehen lassen. Die ineinander greifenden verzahnten Ränder werden von einem Stützring umschlossen, der innen mit Mitteln versehen ist, die bei einer Drehung des Ringes die Verzahnungen ineinander schiebt, die mittleren Teile der beiden Wirkflächen einander nähert und saugnapfartig verformt. Zum Drehen des Stützringes ist er mit einem nach aussen ragenden Griff versehen.

Aufgabe der Erfindung

Die Erfindung stellt sich zur Aufgabe, eine Vorrichtung der genannten Art zu schaffen, die einfacher im Aufbau und bequemer in der Handhabung ist.

Die Erfindung

Die Erfindung löst die gestellte Aufgabe dadurch, dass die Wirkflächen je mit mindestens einem schraubengewindeartig ausgebildeten Teil drehfest verbunden sind, un dass diese Teil unmittelbar miteinander in Wirkverbindung stehen.

Die Handhabung ist dadurch bequemer, weil nun der auf der glatten Abstellfläche zu haltende Gegenstand lediglich unter leichtem Durck auf die Vorrichtung aufgesetzt und gedreht zu werden braucht.

Bei einer bevorzugten Ausführungsform sind die schraubengewindeartigen Teile sowohl an einem zweigeteilten Stützring in Form von Schrägflächen als an einem Zentrierorgan angebracht, wobei die Steigung der Schrägflächen am Stützring und die Steigung der Schrägflächen am Zentrierorgan entgegengesetzt gerichtet sind.

Die Zeichnung

In der Zeichnung ist die Wirkungsweise von drei Ausführungsarten schematisch—und es sind einige Ausführungsbeispiel mehr im Detail dargestellt.

Es zeigen:

Fig. 1—3 Schemata der Wirkungsweise

Fig. 4 eine Vorrichtung, die nach dem Prinzip der Fig. 1 arbeitet im Schnitt,

Fig. 5 die Vorrichtung nach Fig. 4, wobei die linke Hälfte den unteren Teil, die rechte Hälfte den oberen Teil derselben in Ansicht von oben zeigt,

Fig. 6—8 Detailvarianten

Fig. 9—11 eine Vorrichtung nach dem Prinzip der Fig. 2, im Schnitt, in Seitenansicht in Ruhe- und in Betriebslage,

Fig. 12 eine Vorrichtung, die nach dem Prinzip der Fig. 3 arbeitet, im Schnitt,

Fig. 13 eine Detailvariante zu Fig. 9,

Fig. 14 eine Variante zu Fig. 4 mit nur einem Stützring,

Fig. 15 zeigt die Verwendung einer Vorrichtung zum Halten eines Gegenstandes auf einer glatten Abstellfläche nach Fig. 4 und 5,

Fig. 16—20 zeigt ein detailliertes Ausführungsbeispiel mit doppelter Saugwirkung.

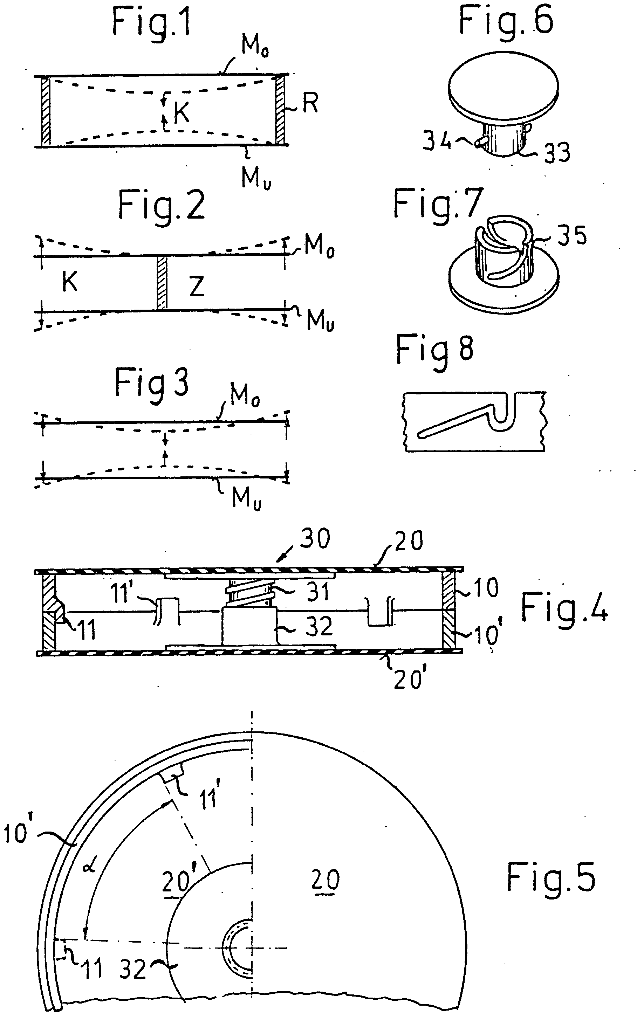

Die Schemata Fig. 1—3 zweigen die drei möglichen Wirkungsweisen. Bei der Wirkungsweise nach Fig. 1 werden die obere Wirkfläche Mo und die untere Wirkfläche Mu im mittleren Bereich durch die hier wirkenden Kräfte K einander genähert, während der Stützring R den Rand der Wirkfläche in gleichem Abstand hält. Die beiden Wirkflächen werden dadurch in die mit unterbrochenen Linien dargestellte Form gebracht und bilden Saugnäpfe, die sich an einer Abstellfläche und an einem oben auf die obere Wirkfläche Mo gestellten Gegenstand festsaugen.

Die schematisch in Fig. 2 dargestellte Wirkungsweise beruht darauf, dass die beiden Wirkflächen Mo, Mu am Umfang voneinander entfernt, im Zentrum Z aber in ihrer Ursprungslage gehalten werden. Die Kräfte K wirken am Rand der Wirkflächen.

Fig. 3 zeigt als dritte Möglickkeit die Kombination beider oben genanten Wirkungsweisen. Die beiden Wirkflächen werden hier am Rand auseinander gedrängt, im mittleren Bereich zusammen gezogen.

Bei sämtlichen Varianten wird das Zusammenzihen und/oder Auseinanderdrängen durch eine Schraubwirkung erzielt.

Ein Ausführungsbeispiel einer Vorrichtung, die nach dem Prinzip von Fig. 1 arbeitet, ist in Fig. 4 und 5 dargestellt. Der Rand besteht aus zwei parallelen Stützringen 10, 10', die mit der Randpartie der Wirkfläche 20, 20' verbunden sind. Im Innern sind an den Stützringen 10, 10' Anschlagnocken 11, 11' angebracht, die den Verdrehungswinkel $\alpha$ der beiden Ringe relativ zueinander begrenzen. Im Zentrum ist ein Zentrierorgan 30 angeordnet, das zwei gewindeartig, miteinander in Wirkverbindung stehende Teile 31, 32 umfasst. An der oberen Wirkfläche 20 ist ein Zapfen 31 mit einem Aussengewinde, an der unteren Wirkfläche 20' ein hülsenartiges Lager 32 mit Innengewinde befestigt.

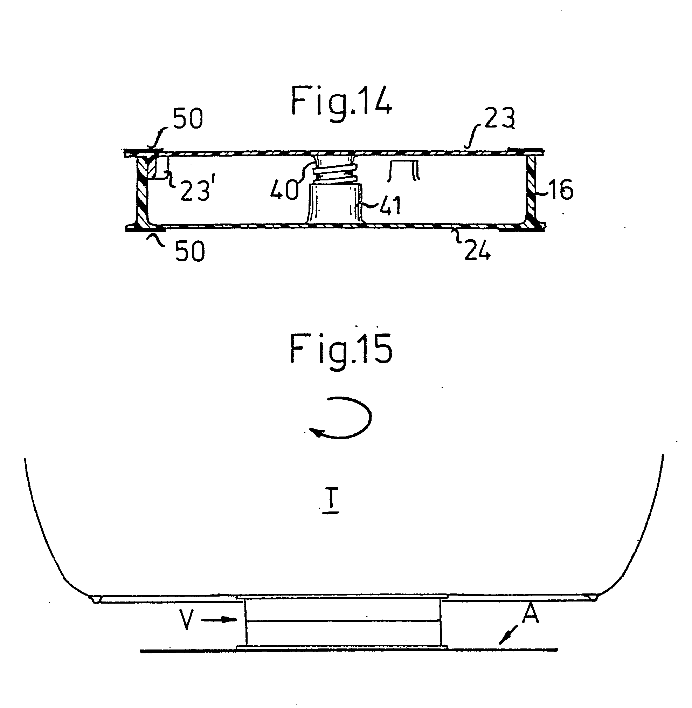

Wird die Vorrichtung V auf eine Abstellfläche A (Fig. 15) gelegt, ein Topf T darauf gestellt und dieser im Uhrzeigersinn um den Winkel $\alpha$ gedreht, steht er fest und unverrückbar auf der Abstellfläche.

Statt eine Zentriervorrichtung mit einem vollen Gewinde zu verwnden, kann der Zapfen 33 mit einem ihm diametral durchsetzenden Stift 34 (Fig. 6) ausgerüstet sein, der ein rudimenteres Aussengewinde darstellt. Das dazupassende Lager (Fig. 7) hat dann eine Hülse 35 mit zwei diametral angeordneten, gewindeartigen Schlitzen. Sind die Schlitze mit einer U-förmigen Einführöffnung versehen, wie Fig. 8 zeigt, bildet der Schlitz Anschläge, die den Dreh winkel in beiden Richtungen begrenzen.

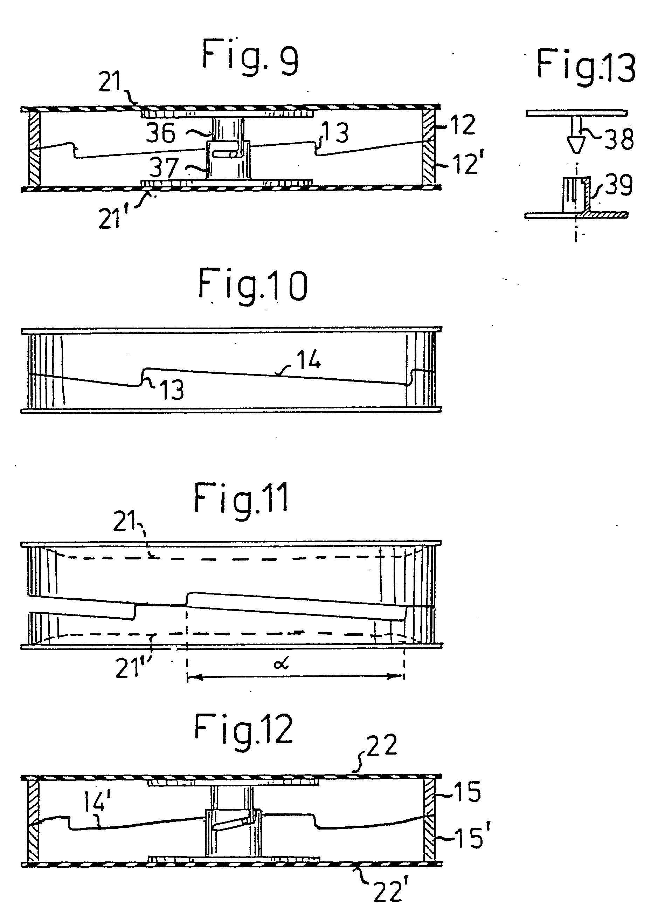

Die Fig. 9—11 zeigen eine Vorrichtung, die nach dem Prinzip von Fig. 2 arbeitet. Die beiden Stützringe 12, 12' sind an ihren Berüngsflächen sägezahnartig abgeschrägt, sodass sie nur in einer Richtung gegeneinander gedreht werden können. Die steilen, in Ruhstellung (Fig. 9 und 10) aneinandergrenzenden Flanken 13 bilden Anschläge gegen eine Drehung im Gegenuhrzeigersinn. Bei einer Drehung im Uhrzeigersinn gleiten die Schrägflächen 14 gewindeartig aufeinander un drängen die beiden Wirkflächen 21, 21' am Rand auseinander.

Die im Zentrum angeordnete Zentriervorrichtung 36, 37 hat hier die Funktion eines auf Zug belasteten Achsiallagers. Der Zapfen 36 und die Hülse 37 des Lagers sind ähnlich wie die Teile 33—35 nach Fig. 6 und 7 gestaltet, mist dem Unterschied, dass der Schlitz in der Hülse des Lagers 37 nicht schräg, sondern senkrecht zur Achse verläuft. Der Schlitz hat eine Einführöffnung und bildet zugleich einen Anschlag, welcher den Verdrehungswinkel $\alpha$ (Fig. 11) begrenzt. Da die Zentriervorrichtung nur achsial gerichtete Zugkräfte aufzunehmen braucht, kann sie auch nach Fig. 13 wie ein nicht lösbarer Druckknopf ausgebildet sein. Wird der Zapfen 38 mit seinem konisch ausgebildeten Kopf in die federnd ausgebildete Lagerhülse 39 gedrückt, kann er ohne diese zu zerstören, nicht mehr aus dieser herausgezogen werden. Bei Verwendung einer solchen Zentriervorrichtung müssen an den Stützringen Anschläge, ähnlich denjenigen nach Fig. 4, angebracht werden. In Fig. 11 ist die Betriebslage der Vorrichtung dargestellt. Die unterbrochenen Linien deuten die Lage der Wirkflächen 21, 21' an.

In Fig. 12 ist eine Vorrichtung dargestellt, die nach dem Prinzip nach Fig. 3 arbeitet. Die Stützringe 15, 15' entsprechen etwa den Stützringen 12, 12' und die Zentriervorrichtung 40 entspricht etwa derjenigen nach den Fig. 6 und 7. Da die Steigungen am Stützring und in der Zentriervorrichtung entgegengesetzt gerichtet sind, werden bei einer Drehung des oberen Teiles relativ zum unteren Teil, die Wirkflächen 22, 22' am Rand auseinander gedrängt und im mittleren Teil einander genähert.

Die oben beschriebenen Vorrichtungen haben Wirkflächen aus Gummi oder gummielastischen Material, die am Rand je mit einem Stützring und im Zentrum je mit einem Teil einer Zentriervorrichtung verbunden sind.

Werden die Wirkflächendünnwandig, aus elastischem Kunststoff hergestellt, kann die Vorrichtung mit einem einzigen Stützring auskommen. Eine Solche Vorrichtung ist in Fig. 14 dargestellt. Die obere Wirkfläche 23 ist einstückig mit dem Zapfen 40 des Zentrierorgans geformt. Lediglich die Randpartie der ist etwas stärker ausgebildet und mit Anschlagsnocken 23' versehen, die den Drehwinkel begrenzen.

Die untere Wirkfläche 24 ist ebenfalls einstückig, zusammen mit dem Rand 16 und der Gewindehülse 41 des Zentrierorgans ausgebildet. Der Kunststoff, aus dem die beiden Wirkflächen hergestellt sind, hat eine relativ glatte Oberfläche. Es ist daher von Vorteil, weicheelastische Ringe 50 auf der Aussenseite, entlang dem Rand der Wirkflächen anzubringen. Die Ringe bilden eine gute Abdichtung auf der Abstellfläche und an der Unterseite des zu haltenden Gegenstandes und gewährleisten, dass die gewünschte Saugnapfwirkung erzielt werden kann.

Die Ausgestaltung der aufeinander gleitenden Schrägflächen 14 der Stützringe ist von wesentlicher Bedeutung. Es ist zum Beispiel sinnvoll die Schrägflächen 14 in den beiden Endlagen in ebene Standflächen übergehen zu lassen, da eine geringere Tendenz besteht, dass die beiden Wirkflächen ungewollt in die Ruhestellung zurückrutschen. Es ist auch möglich die Schrägflächen 14' (Fig. 12) mit zunehmender und dann wider abnehmender Steigung zu versehen, sodass der grösste Hub mit noch geringerem Kraftaufwand überwunden werden kann.

Ferner kann auch eine Einrastungsmöglichkeit in den beiden Endstellungen vorgesehen sein, welche ein ungewolltes Verdrehen der beiden Wirkflächen zueinander erschwert.

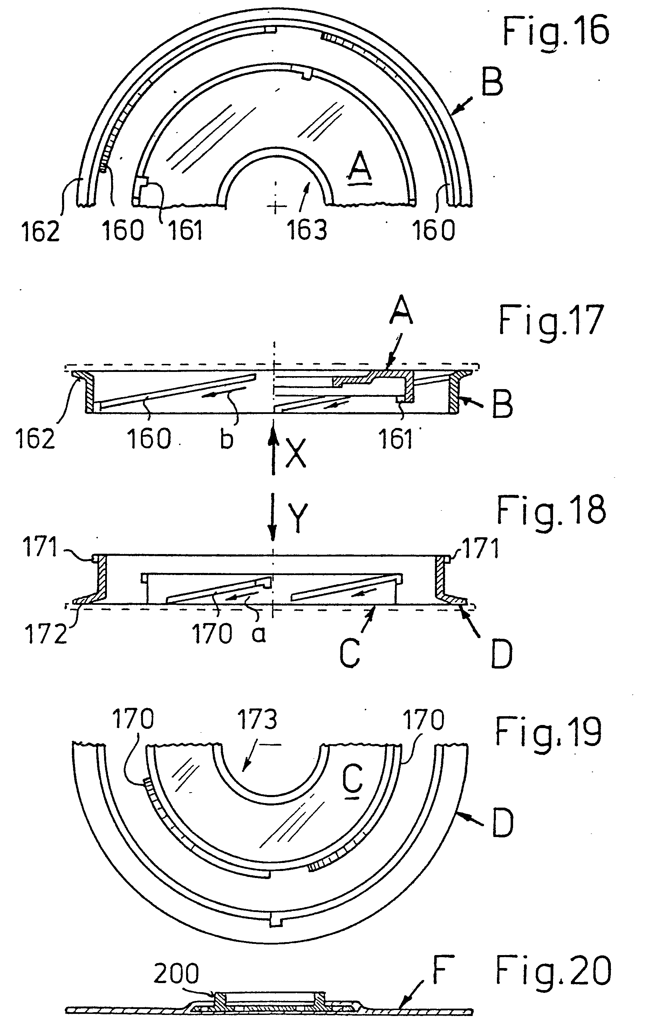

In den Fig. 16—20 ist ein Ausführungsbeispiel dargestellt, dessen Wirkungsweise derjenigen der Prinzipskizze nach Fig. 3 entspricht. Dabei ist Fig. 16 eine Ansicht in Richtung X der Fig. 17. Fig. 17 zeigt zwei Ringe A und B im Schnitt. Desgleichen ist Fig. 19 eine Ansicht in Richtung Y der Fig. 18, die einen Ring D im Schnitt und Ring C in Ansicht darstellt.

Die Vorrichtung besteht aus vier Kunststoffringen A, B, und C, D und zwei Wirkflächeh F. Die Teile A und B werden gleichzeitig in einer Form gespritzt, wozu die konzentrischen Ringe durch nicht dargestellte, später wegzubrechenden Verbindungsbrücken miteinander verbunden sind. Der Aussenring B ist mit vier Innengewindestäben 160 versehen, während der Innenring vier nach innen ragende Nocken 161 aufweist. Der Aussenring B hat einen Rand 162, an den der Aussenrand der Wirkfläche F befestigt wird und der Innenring A hat eine Bohrung 163, in der der zentrale Teil 200 der Wirkfläche F befestigt wird.

Die Teile C und D sind ebenfalls konzentrische Ringe, bei denen aber der Innenring C mit vier Aussengewindestäben 170 und der Aussenring D mit vier nach aussen gerichteten Nocken 171 versehen ist. Die Wirkfläche F wird hier, wie oben beschrieben, am Rand 172 des Aussenringes D und in der Bohrung 173 des Innenringes C befestigt.

Die Wirkflächen bestehen aus zwei Teilen, einem harten, zentralen Befestigungsflansch 200, aus Kunststoff der im weicheren, die eigentliche Wirkfläche bildenen Kunststoff F eingebettet ist. Der Rand des Flansches 200 ragt aus der weichen Wirkfläche F heraus.

Bei der Montage wird der Flansch 200 der einen Wirkfläche in der Bohrung 163 des Ringes A und deren Rand am Rand 162 des Ringes B befestigt. Erst danach werden die vom Herstellungsvorgang, dem Spritzen, noch vorhandenen Brücken zwischen den beiden Ringen A und B weggebrochen. Die Brücken halten nämlich die beiden Ringe A und B bis zur Beendigung der Montage in konzentrischer und winkeltreuen Lage zueinander. Die zweite Wirkfläche wird auf gleiche Weise mit der Bohrung 173 von Ring C und dem Rand 172 vom Ring D verbunden.

Nach dem Entfernen der Verbindungsbrücken zwischen den Teilen A und B bzw. C und D sind diese je nur noch durch die Wirkflächen F miteinander verbunden.

Die Teile A, B und F und die Teile C, D und F bilden dann je für sich eine zusammenhängende Einheit. Die Ringe der beiden Einheiten sind so dimensioniert, dass sie sich zusammenfügen lassen zu einer doppelt wirkenden Saugvorrichtung, die bei einer Verdrehung relativ zueinander wirksam wird. Bei einer solchen Verdrehung um ca. 90° gleiten die Nocken 161 von A entlang der unteren Seite der Aussengewindestäbe 170 von C in Richtung der Pfeile a in Fig. 18. Gleichzeitig gleiten die Nocken 171 von D auf den Innengewindestäben 160 von B in Richtung der Pfeile b in Fig. 17. Dies hat zur Folge, dass die Innenringe A und C sich einander nähern, während die beiden Aussenringe B, D auseinander gedrängt werden. Auf diese Weise entsteht die gewünschte doppelte Saugwirkung an der unteren und der oberen Seite der Vorrichtung.

**Patentansprüche**

1. Vorrichtung zum Halten eines Gegenstandes auf einer glatten Abstellfläche mittels zwei in Abstand vonund parallel zueinander verlaufenden, Wirkflächen zwischen denen sich ein am Umfang derselben angeordneter Stützring (R) befindet, während die Wirkflächen in ihrem mittleren Teil zentrierend gehalten und saugnapfartig verformbar sind, dadurch gekennzeichnet, dass die Wirkflächen (20, 20'; 21, 21'; 22, 22'; 23, 24; F) je mit mindestens einem schraubengewindeartig ausgebildeten Teil (31, 32; 12, 12'; 15, 15'; 40, 41; 160, 171, 170, 161) drehfest verbunden sind, und dass diese Teile unmittelbar miteinander in Wirkverbindung stehen.

2. Vorrichtung nach Anspruch 1 dadurch gekennzeichnet, dass die in Wirkverbindung miteinander stehenden, ein Schraubengewinde aufweisenden Teil (31, 32; 34, 35; 40, 41) das Zentrierrogan bilden, während der Stützring (10, 12, 15, 16) mit mindestens einer Wirkfläche (20; 21; 22; 24) drehfest verbunden ist.

3. Vorrichtung nach Anspruch 1, dadurch gekennzeichnet, dass der Stützring zweigeteilt ist, und dass jede Hälfte (12, 12') gewindeartige Schrägflächen (14) aufweist, während ein im Zentrum der Wirkflächen angebrachtes Zentrierrogan (36, 37; 38, 39) ein Aixallager bildet.

4. Vorrichtung nach Anspruch 1 dadurch gekennzeichnet, dass die schraubengewindeartigen Teile sowohl an einem zweigeteilten Stützring (15, 15'; B, D) in Form von Schrägflächen (14', 160) als an einem Zentrierorgan (A, C) angebracht sind, wobei die Steigung der Schrägflächen (14', 160) am Stützring und die Steigung der Schrägflächen (170) am Zentrierorgan entgegengesetzt gerichtet sind.

5. Vorrichtung nach den Ansprüchen 3 und 4 dadurch gekennzeichnet, dass an beiden Stützringhälten (10, 10'; 12, 12'; 15, 15') Anschläge (11; 13) angebracht sind, die den Drehwinkel der beiden Wirkflächen relativ zueinander begrenzen.

6. Vorrichtung nach Anspruch 3 dadurch gekennzeichnet, dass die Schrägflächen (14) in den beiden Endpositionen in ebene Standflächen übergeher.

7. Vorrichtung nach Anspruch 2, dadurch gekennzeichnet, dass das Aussengewinde am Zapfen (33) auf einen denselben durchsetzenden Stift (34) reduziert ist und dass das Innengewinde des Lagers gewindeartige, in einer Hülse (35) angebrachte Schlitze sind, die den Drehwinkel der Wirkfläche relativ zueinander in mindestens einer Richtung begrenzen.

8. Vorrichtung nach Anspruch 3, dadurch gekennzeichnet, dass das Zentrierorgan als nicht lösbare Druckknopfverbindung (38, 39) ausgebildet ist.

9. Vorrichtung nach Anspruch 3, dadurch gekennzeichnet, dass das Zentrierorgan eine Lagerhülse (37) mit senkrecht zur Drehachse verlaufenden Schlitzen, mit parallel zur Drehachse verlaufender Einführöffnung und einen von einem Stift durchsetzten Zapfen (36) aufweist.

10. Vorrichtung nach den Ansprüchen 3 und 4, dadurch gekennzeichnet, dass die Steigung der Schrägflächen (14') auf ihrer Länge von einer Endposition zur anderen variiert.

## Revendications

1. Dispositif pour maintenir un objet sur une surface de support lisse au moyen de deux surfaces actives espacées l'une de l'autre et parallèles entre elles, entre lesquelles se trouve un anneau de soutien (R) disposé à leur circonférence, tandis que les surfaces actives, en leur partie centrale, sont maintenues avec centrage et déformables à la façon de ventouses, caractérisé en ce que les surfaces actives (20, 20'; 21, 21'; 22, 22'; 23, 24; F) sont chacune reliées de façon solidaire en rotation à au moins un élément constitué à la façon d'un filetage (31, 32; 12, 12'; 15, 15'; 40, 41; 160, 171, 170, 161), et en ce que ces éléments sont directement en liaison fonctionnelle entre eux.

2. Dispositif selon la revendication 1, caractérisé en ce que les éléments en liaison fonctionnelle entre eux et présentant un filetage (31, 32; 34, 35; 40, 41) forment l'organe de centrage, tandis que l'anneau de soutien (10, 12, 15, 16) est relié de façon solidaire en rotation à au moins une surface active (20; 21; 22; 24).

3. Dispositif selon la revendication 1, caractérisé en ce que l'anneau de soutien est divisé en deux, et en ce que chaque moitié (12, 12') présente des surfaces obliques similaires à un filetage (14), tandis qu'un organe de centrage (36, 37; 38, 39) disposé au centre des surfaces actives forme un palier de butée.

4. Dispositif selon la revendication 1, caractérisé en ce que les éléments similaires à un filetage sont disposés aussi bien sur un anneau de soutien divisé en deux (15, 15'; B, D), sous la forme de surfaces obliques (14', 160) que sur un organe de centrage (A, C), le pas des surfaces obliques (14', 160) de l'anneau de soutien et le pas des surfaces obliques (170) de l'organe de centrage étant de sens opposé.

5. Dispositif selon les revendications 3 et 4, caractérisé en ce que sur les deux moitiés d'anneau de soutien (10, 10'; 12, 12'; 15, 15') sont disposées des butées (11; 13), qui limitent l'angle de rotation des deux surfaces actives l'une par rapport à l'autre.

6. Dispositif selon la revendication 3, caractérisé en ce que les surfaces obliques (14) rejoignent, dans les deux positions extrêmes, des surfaces de pose planes.

7. Dispositif selon la revendication 2, caractérisé en ce que le filetage extérieur du tourillon (33) est réduit à une goupille (34) traversant celui-ci, et en ce que le filetage intérieur du coussinet est formé de fentes en forme de filetages pratiquées dans une douille (35), et qui limitent l'angle de rotation des surfaces actives l'une par rapport à l'autre, dans au moins un sens.

8. Dispositif selon la revendication 3, caractérisé en ce que l'organe de centrage est constitué sous la forme d'un assemblage à bouton pression non détachable (38, 39).

9. Dispositif, suivant la revendication 3, caractérisé en ce que l'organe de centrage présente une rainure de coussinet (37) pourvue de fentes perpendiculaires à l'axe de rotation, et d'une ouverture d'insertion parallèle à l'axe de rotation, et un tourillon (36) traversé par une broche.

10. Dispositif selon les revendications 3 et 4, caractérisé en ce que le pas des surfaces obliques (14') varie sur leur longueur, d'une position extrême à l'ature.

## Claims

1. Apparatus for holding an object on a smooth stop surface by means of two effective surfaces which are spaced from and parallel to each other and between which is located a backing ring (R) arranged at their peripheries, these effective surfaces being held at their middle parts in centred relationship and being deformable in the manner of suction cups, characterized in that the effective surfaces (20, 20'; 21, 21'; 22, 22'; 23, 24; F) are each connected to and rotate with at least one part (31, 32; 12, 12'; 15, 15'; 40, 41; 160, 171, 170, 161) in the form of a screw-thread, and in that these parts are in direct operative connection with each other.

2. Apparatus according to claim 1, characterized in that the parts (31, 32; 34, 35; 40, 41), which have a screw-thread and are in effective connection with each other, form the centring member, and the backing ring (10, 12, 15, 16) is connected to and rotates with at least one effective surface (20; 21; 22; 24).

3. Apparatus according to claim 1, characterized in that the backing ring is divided into two parts, and in that each half (12, 12') has inclined faces (14) resembling a screw-thread, and a centring member (36, 37; 38, 39), provided at the centres of the effective surfaces, forms a thrust bearing.

4. Apparatus according to claim 1, characterized in that the parts resembling screwthreads are provided on a two-part backing ring (15, 15'; B, D) in the form of inclined faces (14', 160) as well as on a centring member (A, C), the pitch of the inclined faces (14', 160) on the backing ring and the pitch of the inclined faces (170) on the centring member being in opposite directions to each other.

5. Apparatus according to claims 3 and 4, characterized in that stops (11; 13) are provided on the two halves (10, 10'; 12, 12'; 15,

**0 020 353**

15') of the backing ring, which stops limit the angle of rotation of the two effective surfaces relative to each other.

6. Apparatus according to claim 3, characterized in that the inclined faces (14) communicate with planar base surfaces in the two end positions.

7. Apparatus according to claim 2, characterized in that the external thread on the peg (33) is reduced to a pin (34), extending through the peg, and in that the internal thread of the bearing is constituted by thread-like slots formed in a sleeve (35), which slots limit the angle of rotation of the effective surfaces relatively to each other in at least one direction.

8. Apparatus according to claim 3, characterized in that the centring member is designed as a non-releasable push-button connection (38, 39).

9. Apparatus according to claim 3, characterized in that the centring member has a bearing sleeve (37) with slots, extending at right angles to the axis of rotation and with an inlet opening extending parallel to the axis of rotation, and has a lug (36) traversed by a pin.

10. Apparatus according to claims 3 and 4, characterized in that the pitch of the inclined faces (14') varies along their length from one end position to the other.

0 020 353

Fig.1

Fig.6

Fig.2

Fig.7

Fig 3

Fig 8

Fig.4

Fig.5

Fig. 9

21　36　13　12　12'　37　21'

Fig.13

38　39

Fig.10

14　13

Fig.11

21　21"　∝

Fig.12

22　14'　15　15'　22'

## Fig.14

## Fig.15

Fig.16

Fig.17

Fig.18

Fig.19

Fig.20